# EUROPÄISCHE PATENTSCHRIFT

(11) **EP 3 237 486 B1**
(45) Veröffentlichungstag und Bekanntmachung des Hinweises auf die Patenterteilung: **06.02.2019**
(21) Anmeldenummer: 15816746.0
(22) Anmeldetag: 17.12.2015
(51) Int. Cl.: C08G 59/50, C09J 163/00, C08L 63/00

(54) **EPOXIDHARZ-ZUSAMMENSETZUNG**
EPOXY RESIN COMPOSITION
COMPOSITION DE RÉSINE ÉPOXY

(30) Priorität: 22.12.2014 DE 102014226826
(43) Veröffentlichungstag der Anmeldung: 01.11.2017
(73) Patentinhaber: Henkel AG & Co. KGaA, 40589 Düsseldorf (DE)
(72) Erfinder: HOLTGREWE, Christian, 40225 Düsseldorf (DE); KÜSTER, Harald, 40625 Düsseldorf (DE); BACHON, Thomas, 40597 Düsseldorf (DE); SCHÖNFELD, Rainer, 40627 Düsseldorf (DE)
(86) Internationale Anmeldenummer: PCT/EP2015/080329
(87) Internationale Veröffentlichungsnummer: WO 2016/102329

(56) Entgegenhaltungen:
- EP-A1- 0 169 066
- WO-A1-2008/016889
- WO-A1-2012/110230
- WO-A1-2013/151835
- WO-A2-2011/123356
- WO-A2-2013/086277
- WO-A2-2014/072449
- DE-A1- 19 845 607
- DE-A1-102007 027 595
- US-A1- 2012 142 817

## Beschreibung

Die vorliegende Erfindung betrifft Klebstoffzusammensetzungen auf Epoxidharzbasis und daraus erhältliche gehärtete Zusammensetzungen, die sich durch niedrige Elastizitätsmodule und hohe Glasübergangstemperaturen auszeichnen, sowie Verfahren zu deren Herstellung.

In der Automobilindustrie aber auch auf anderen Gebieten sind Klebstoffe auf Epoxidharzbasis weit verbreitet und werden beispielsweise dazu verwendet, Bauteile, die aus demselben oder ähnlichen Materialien, wie z.B. Aluminium bestehen, miteinander zu verkleben. Beim Verkleben unterschiedlicher Materialien, wie z.B. Kohlefaser- oder Glasfaserverbundwerkstoffen und Metallen wie Stahl oder Aluminium, kann es aber aufgrund der Unterschiede der Materialien, insbesondere ihrer unterschiedlichen Wärmeausdehnungskoeffizienten, zu Spannungen kommen. Es ist daher vorteilhaft zum Verkleben solch unterschiedlicher Materialien Klebstoffe zu verwenden, die im ausgehärteten Zustand niedrige Elastizitätsmodule (E Module) aufweisen. Obwohl derartige Klebstoffe bekannt sind, haben diese oftmals Nachteile im Hinblick auf ihre mechanische Festigkeit und Leistung und niedrigere Glasübergangstemperaturen. Gerade für Industrieklebstoffe ist es aber wünschenswert, möglichst hohe Glasübergangstemperaturen aufzuweisen.

Es ist beispielsweise bekannt, Weichmacher zu verwenden, um das E Modul eines Epoxidharz-Klebstoffes, der typischerweise E Module im Bereich von 1600 bis 2000 MPa hat, zu senken. Derartige Weichmacher reduzieren aber auch die Glasübergangstemperatur. Als geeignete Weichmacher werden beispielsweise Polyurethan-verkappte Präpolymere oder CTBN Epoxidharz-Addukte verwendet. So offenbart beispielsweise die internationale Patentveröffentlichung WO 2007/025007 Klebstoffzusammensetzungen, die Kautschukpartikel mit Kern-Schale-Struktur, weitere Schlagzähigkeitsmodifikatoren, u.a. Epoxy-Polyetheramin-Addukte und Polyurethane, Epxoidharz und einen Härter enthalten. Die darin offenbarten Zusammensetzungen haben allerdings die genannten Nachteile, da sie die Glasübergangstemperatur sehr stark reduzieren. Ferner offenbart WO 2013/086277 A2 Klebstoffzusammensetzungen basierend auf einem Epoxidharz, einem Polyetherdiamin, CTBN und Kautschukpartiklen mit Kern-Schale-Struktur.

Es besteht daher nach wie vor Bedarf an Klebstoffen auf Epoxidharzbasis, die die genannten Nachteile überwinden.

Es wurde nun überraschenderweise gefunden, dass gehärtete Klebstoffzusammensetzungen mit niedrigen E Modulen von <500 MPa und hohen Glasübergangstemperaturen von >100°C erhältlich sind durch Härten einer Klebstoffzusammensetzung, die ein Präpolymer enthält, das gebildet wird durch Umsetzen einer Reaktionsmischung enthaltend: mindestens ein Epoxidharz; mindestens ein Polyetherdiamin oder -triamin; mindestens ein carboxyl-terminiertes Butadien-Acrylnitril Copolymer *(*CTBN*)*; und Kautschukpartikel mit einer Kern-Schale-Struktur.

In einem ersten Aspekt betrifft die vorliegende Erfindung daher eine Klebstoffzusammensetzung umfassend ein Präpolymer erhältlich durch Umsetzen eines Reaktionsgemisches enthaltend:
(a) mindestens ein Epoxidharz;
(b) mindestens ein Polyetherdiamin oder -triamin;
(c) mindestens ein carboxyl-terminiertes Butadien-Acrylnitril Copolymer (CTBN); und
(d) Kautschukpartikel mit einer Kern-Schale-Struktur.

In einem weiteren Aspekt betrifft die Erfindung Verfahren zur Herstellung einer gehärteten Klebstoffzusammensetzung, wobei das Verfahren das Bereitstellen einer hierin beschriebenen Klebstoffzusammensetzung und das anschließende teilweise oder vollständige Härten der Klebstoffzusammensetzung durch Exposition gegenüber Bedingungen, die zum Aushärten der Klebstoffzusammensetzung geeignet sind, umfasst.

In noch einem weiteren Aspekt betrifft die Erfindung eine gehärtete Klebstoffzusammensetzung, die durch teilweises oder vollständiges Härten der hierin beschriebenen Klebstoffe erhältlich ist. In verschiedenen Ausführungsformen haben derartige gehärtete Zusammensetzungen ein E Modul <800 MPa und eine Glasübergangstemperatur von >100°C.

Schließlich betrifft die Erfindung auch ein Verfahren zum Verkleben von mindestens zwei Bauteilen, umfassend:
(a) Auftragen einer Klebstoffzusammensetzung wie hierin beschrieben auf eines oder beide zu verklebende Bauteile;
(b) In Kontakt bringen der Bauteile derart, dass die Klebstoffzusammensetzung zwischen den beiden Bauteilen liegt; und
(c) Teilweises oder vollständiges Härten der Klebstoffzusammensetzung durch Exposition gegenüber Bedingungen, die zum Aushärten der Klebstoffzusammensetzung geeignet sind,
und die so erhältlichen Bauteile.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KlebstoffZusammensetzungen bezieht sich diese Angabe nicht auf die absolute Menge an Molekülen sondern auf die Art des Bestandteils. "Mindestens ein Epoxidharz" bedeutet daher beispielsweise ein oder mehrere verschiedene Epoxidharze, d.h. eine oder mehrere verschiedene Arten von Epoxidharzen. Zusammen mit Mengenangaben beziehen sich die Mengenangaben auf die Gesamtmenge der entsprechend bezeichneten Art von Bestandteil, wie bereits oben definiert.

"Ungefähr", wie hierin im Zusammenhang mit Zahlenwerten verwendet, bezieht sich auf den referenzierten Zahlenwert ±10%, vorzugsweise ±5%.

Sofern hierin auf Molekulargewichte Bezug genommen wird, beziehen sich die Angaben auf das zahlenmittlere Molekulargewicht Mₙ, sofern nicht anders angegeben.

"Präpolymer", wie hierin austauschbar mit den Begriffen "Vorpolymerisat" oder "vorpolymerisierte Mischung" verwendet, bezieht sich auf vorpolymerisierte Zusammensetzungen mit den genannten Bestandteilen, in denen die verschiedenen Bestandteile bereits teilweise oder vollständig miteinander umgesetzt wurden.

Es ist allgemein vorteilhaft, dass das E Modul von Epoxidharz-Klebstoffen, wie sie im Automobilbau verwendet werden, derart ausgelegt ist, dass Materialien mit unterschiedlichen Wärmeausdehnungskoeffizienten effizient und dauerhaft miteinander verklebt werden können. Dabei ist es bevorzugt, dass das E Modul möglichst niedrig ist. Die gehärteten Klebstoffzusammensetzungen der Erfindung weisen daher in verschiedenen Ausführungsformen E Module von weniger als 800 MPa, vorzugsweise weniger als 600 MPa, noch bevorzugter weniger als 500 MPa auf. Auf der anderen Seite ist es bevorzugt, dass das E Modul mindestens 100 MPa, vorzugsweise mindestens 300 MPa, noch bevorzugter mindestens 400 MPa beträgt.

Die Glasübergangstemperatur der gehärteten Zusammensetzungen ist vorzugsweise höher als die Prozess- oder Umgebungstemperaturen, denen die Bauteile nach dem Verkleben ausgesetzt werden. Es ist daher bevorzugt, dass die Glasübergangstemperatur der hierin beschriebenen gehärteten Zusammensetzungen möglichst hoch, d.h. vorzugsweise >100°C, besonders bevorzugt > 110°C ist.

Dazu enthalten die Klebstoffzusammensetzungen der vorliegenden Erfindung ein Präpolymer, das erhältlich ist durch Umsetzen von:
(a) mindestens einem Epoxidharz;
(b) mindestens einem Polyetherdiamin oder -triamin;
(c) mindestens einem carboxyl-terminiertes Butadien-Acrylnitril Copolymer (CTBN); und
(d) Kautschukpartikel mit einer Kern-Schale-Struktur.

Die Klebstoffzusammensetzungen enthalten neben diesem vorgebildeten Präpolymeren üblicherweise mindestens einen Härter, insbesondere einen (wärmeaktivierbaren) latenten Härter, sowie optional zusätzlich übliche Hilfs- und Zusatzstoffe, wie Füllstoffe, Haftvermittler, Beschleuniger, Farbstoffe, Treibmittel, etc..

Die in den hierin beschriebenen Klebstoffzusammensetzungen verwendeten Epoxidharze können ganz allgemein alle Epoxidharze sein, die mindestens zwei 1,2-Epoxidgruppen pro Molekül aufweisen. Derartige Polyepoxide können gesättigte, ungesättigte, zyklische oder azyklische, aliphatische, alizyklische, aromatische oder heterozyklische Polyepoxidverbindungen sein. Beispiele für geeignete Polyepoxide schließen Polyglycidylether ein, wie zum Beispiel die, die durch Umsetzen von Epichlorhydrin oder Epibromhydrin mit einem Polyphenol in Gegenwart einer Base darstellbar sind, ein. Geeignete Polyphenole schließen ein, ohne Beschränkung, Resorcin, Pyrocatechol, Hydrochinon, Bisphenol A (Bis(4-hydroxyphenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan und 1,5-Hydroxynaphthalin. Weitere geeignete Polyphenole sind die bekannten Kondensationsprodukte von Phenol und Formaldehyd oder Acetaldehyd des Novolak-Typs.

Weitere Polyepoxide, die prinzipiell ebenfalls geeignet sind, sind die Polyglycidylether von Polyalkoholen oder Diaminen. Als Polyalkohole sind dabei beispielsweise Ethylenglykol, Diethylenglykol, Triethylenglykol, 1,2-Propylenglykol, 1,4-Butylenglykol, 1,5-Pentandiol, 1,6-Hexandiol oder Trimethylolpropan geeignet.

Weitere geeignete Polyepoxide sind die Polyglycidylester von Polycarbonsäuren, zum Beispiel die Reaktionsprodukte von Glycidol oder Epichlorhydrin mit aliphatischen oder aromatischen Polycarbonsäuren, wie Oxalsäure, Bernsteinsäure, Glutarsäure, Terephthalsäure oder dimeren Fettsäuren.

Weitere Epoxide leiten sich ab von den Epoxidierungsprodukten olefinisch-ungesättigter cycloaliphatischer Verbindungen aus natürlichen Ölen oder Fetten.

Besonders bevorzugt sind allerdings flüssige Epoxidharze, insbesondere solche die durch Umsetzen von Bisphenol A oder Bisphenol F und Epichlorhydrin erhalten werden. Solche Epxoidharze, die bei Raumtemperatur (20°; 1013 mbar) flüssig sind, haben typischerweise Epoxy-Äquivalentgewichte von ungefähr 150 bis ungefähr 480. Produkte dieser Art sind beispielsweise als D.E.R. 331, mit einem Epoxy-Äquivalentgewicht von ungefähr 180 bis 195 g/mol, oder D.E.R. 332, mit einem Epoxy-Äquivalentgewicht von ungefähr 170 bis 175 g/mol, kommerziell erhältlich (Dow Chemicals).

Alternativ können aber auch Epoxidharze verwendet werden, die bei Raumtemperatur fest sind und durch Umsetzen von Polyphenolen mit Epichlorhydrin erhältlich sind. Besonders bevorzugt sind auch hier solche auf Basis von Bisphenol A oder Bisphenol F mit Schmelzpunkten im Bereich von 45 bis 130°C, vorzugsweise 50 bis 80°C. Sie unterscheiden sich von den flüssigen Epoxidharzen im Wesentlichen durch ihr höheres Molekulargewicht und haben üblicherweise Epoxy-Äquivalentgewichte ≥ 400.

Typischerweise enthält die zur Herstellung des Präpolymers verwendete Reaktionsmischung ungefähr 25 bis ungefähr 60 Gew.-%, insbesondere 30 bis 55 Gew.-% des mindestens einen Epoxidharzes. Sofern nicht anders angegeben, beziehen sich hierin alle Prozentangaben auf Gewichts-%.

Die vorstehend beschriebenen Epoxidharze werden mit mindestens einem Polyetherdiamin oder - triamin; mindestens einem carboxyl-terminiertes Butadien-Acrylnitril Copolymer (CTBN); und Kautschukpartikel mit einer Kern-Schale-Struktur umgesetzt. Durch die Reaktion der Epoxidharze mit dem Polyetheramin ergeben sich Polyetheramin-Epoxy-Addukte, die im Stand der Technik als Schlagzähigkeitsmodifikatoren bekannt sind (siehe, z.B. WO 2007/025007). Die Herstellung solcher Addukte aus Epoxiden und Amin-terminierten Polyethern ist im Stand der Technik bekannt und wird beispielsweise in den U.S. Patenten 5,084,532 und 6,015,865 beschrieben. Im Allgemeinen ist es bevorzugt, das Verhältnis von Amin-terminiertem Polyether:Epoxidharz so einzustellen, dass die Epoxidgruppen im Verhältnis zu den Amingruppen im Überschuß vorhanden sind, um sicherzustellen, dass letztere vollständig umgesetzt werden.

Als Amin-terminierte Polyether können beispielsweise Polyetherdiamine, -triamine oder Mischungen davon eingesetzt werden, wobei Polyethertriamine bevorzugt sind. Die Amin-terminierten Polyether können Einheiten von Ethylenoxid, Propylenoxid oder beiden, beispielsweise in Form von Copolymeren, enthalten. Die Polyetheramine enthalten mindestens zwei Aminogruppen pro Molekül. Die Aminogruppen sind vorzugsweise primäre Aminogruppen und die Polyether sind vorzugsweise aliphatische Polyether. Die Polyetheramine können linear, verzweigt oder eine Mischung davon sein, wobei allerdings verzweigte Polyetheramine bevorzugt sind. Die eingesetzten Polyetheramine haben in verschiedenen Ausführungsformen Molekulargewichte Mₙ im Bereich von 200 bis 6000 g/mol, bevorzugt sind solche mit Mₙ über 1000, noch bevorzugter von 3000 oder mehr. Molekulargewichte von 3000 und 5000 sind besonders bevorzugt.

Als Polyetheramine können beispielsweise die folgenden verwendet werden:
1. lineare Amine-terminierte Polyoxyethylenether der Formel:

   H₂N-(CH₂)₂-[O-(CH₂)₂-O-(CH₂)₂]ₙ-NH₂

   wobei n vorzugsweise 17 bis 27 ist.
2. lineare Amin-terminierte Polyoxypropylenether der Formel: 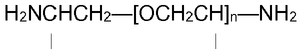 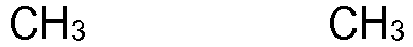 oder Isomere Davon, wobei n vorzugsweise 5 bis 100 ist. Derartige Verbindungen sind beispielsweise kommerziell von Huntsman Chemical unter dem Handelsnamen Jeffamine® (D-, ED- und DR-Serie) erhältlich. Diese schließen Jeffamine® D-230, D-400, D-2000, D-4000, HK-511, ED-600, ED-900, ED-2003, EDR-148 und EDR-176 ein. Das mittlere Molekulargewicht Mₙ solcher Amin-terminierter Polyoxypropylenether kann, in verschiedenen Ausführungsformen, von ungefähr 300 bis ungefähr 5000 variieren.
3. trifunktionelle Verbindungen der Formel: 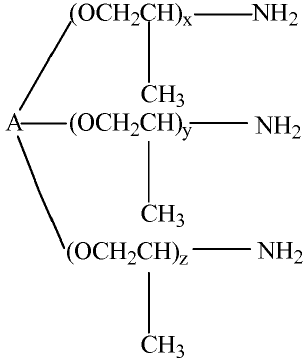 wobei A 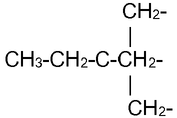 oder 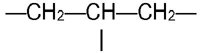 ist und x, y und z unabhängig voneinander 1 bis 40 sind und x+y+z vorzugsweise >6 ist. Derartige trifunktionelle Verbindungen sind beispielsweise kommerziell von Huntsman Chemical unter dem Handelsnamen Jeffamine® (T-Serie) erhältlich. Das mittlere Molekulargewicht Mₙ solcher trifunktioneller Amin-terminierter Polyoxypropylenether kann, in verschiedenen Ausführungsformen, von ungefähr 300 bis ungefähr 6000 variieren. Bevorzugt sind beispielsweise Jeffamine® T3000 und Jeffamine® T5000 und besonders bevorzugt ist Jeffamine® T5000.

Wie bereits oben erwähnt, ist es bevorzugt, dass die Epoxidgruppen bezogen auf die Aminogruppen im Überschuß eingesetzt werden, so dass letztere möglichst vollständig umgesetzt werden. Typischerweise werden die Epoxidgruppen in einem mindestens 1,5-, beispielsweise mindestens in einem 3,5-fachen Überschuß gegenüber den aktiven Wasserstoffäquivalenten (AHEW) der Amin-terminierten Polyether eingesetzt. Die Reaktion wird vorzugsweise bei erhöhter Temperatur, beispielsweise bei 90 bis 130°C, insbesondere bei etwa 120°C, für eine Dauer von z.B. drei Stunden durchgeführt.

Die Amin-terminierten Polyether werden erfindungsgemäß typischerweise in Mengen von 15 bis 40 Gew.-% bezogen auf das Gesamtgewicht der zur Herstellung des Präpolymers verwendeten Reaktionsmischung eingesetzt. Die resultierenden Polyetheramin-Epoxid-Addukte sind vorzugsweise in Mengen von mindestens 3 Gew.-%, bevorzugter mindestens 5 Gew.-%, noch bevorzugter mindestens 10 Gew.-%, und bis zu 60 Gew.-%, vorzugsweise bis zu 40 Gew.-%, noch bevorzugter bis zu 20 Gew.-%, jeweils bezogen auf das Gesamtgewicht der Formulierung, in der Klebstoffformulierung enthalten.

Die hierin verwendeten carboxyl-terminierten Butadien-Acrylnitril Copolymere (CTBN) sind ebenfalls im Stand der Technik als Schlagzähigkeitsmodifikatoren bekannt. Es handelt sich hierbei üblicherweise um Epoxy-reaktive Copolymere von Butadien mit (Meth)Acrylnitril. Derartige Copolymere sind beispielsweise von Noveon unter dem Handelsnamen HYCAR® erhältlich. Derartige Copolymere können auch als Reaktionsprodukte der carboxyl-terminierten Butadien-Acrylnitril Copolymere mit Epoxidharzen eingesetzt werden, wie sie beispielsweise in den US Patenten US 2003/0196753 und US 6,776,869 beschrieben werden. Die CTBNs werden hierin vorzugsweise in Form von Reaktionsprodukten mit Epoxidharzen, insbesondere solchen, wie sie vorstehend beschrieben worden sind, d.h. insbesondere Diglycidylethern von Bisphenolen, eingesetzt. Derartige Reaktionsprodukte sind beispielsweise unter dem Handelsnamen Araldite® LT1522 ES von Huntsman erhältlich.

Falls die carboxyl-terminierten Butadien-Acrylnitril Copolymere nicht in Form von Vorpolymerisaten mit Epoxidharzen eingesetzt werden, ist es bevorzugt, dass die Epoxidgruppen bezogen auf die epoxy-reaktiven Gruppen im Überschuß eingesetzt werden. Hierbei ist dann zu berücksichtigen, dass die Epoxidgruppen bezogen auf die Aminogruppen der amin-terminierten Polyether und die epoxy-reaktiven Gruppen der CTBNs im Überschuß eingesetzt werden, so dass Amino- und Epoxy-reaktive Gruppen möglichst vollständig umgesetzt werden. Typischerweise werden die Epoxidgruppen auch hier in einem 1,5- bis 10-fachen, beispielsweise in einem 3,5-fachen Überschuß gegenüber den aktiven Wasserstoffäquivalenten (AHEW) der epoxy-reaktiven Gruppen, einschließlich der Aminogruppen, eingesetzt. Die Reaktion kann wie oben im Zusammenhang mit den Polyetheramin-Addukten beschrieben durchgeführt werden.

Die CTBN Copolymere, insbesondere die CTBN-Epoxid-Addukte, werden typischerweise in Mengen von 2 bis 20 Gew.-%, insbesondere 5 bis 15 Gew.-%, vorzugsweise 6-9 Gew.-%, jeweils bezogen auf die Reaktionsmischung eingesetzt.

Die Kautschukpartikel mit Kern-Schale Struktur können alle für den hierin beschriebenen Zweck bekannten und geeigneten partikulären Materialien mit einem Kautschukkern sein. Bevorzugte Kern-Schale-Partikel-Zusammensetzungen werden beispielsweise in den US Patenten US 7,642,316 und US 7,625,977. Der Kautschukkern hat vorzugsweise eine Glasübergangstemperatur T_{g} von unter - 25°C, bevorzugter weniger als -50°C und noch bevorzugter weniger als -70°C. Die T_{g} des Kerns kann sogar deutlich unter -100°C liegen. Die Kern-Schale-Partikel haben ebenfalls einen Schalenanteil, der vorzugsweise eine T_{g} von mindestens 50°C.

Mit "Kern" ist hierin der innere Teil des Partikels gemeint. Der Kern kann das Zentrum des Kern-Schale-Partikels oder eine innere Hülle oder Domäne des Partikels darstellen. Mit "Hülle" oder "Schale" ist hierin der Teil außerhalb des Kerns gemeint und bildet üblicherweise die äußere Hülle, d.h. den äußersten Teil des Partikels. Das Schalenmaterial ist vorzugsweise auf den Kern gepfropft oder mit diesem quervernetzt. Der Kautschukkern kann 50 bis 95 Gew.-%, insbesondere 60 bis 90 Gew.-%, des Partikels ausmachen.

Der Kern des Partikels kann ein Polymer oder Copolymer eines konjugierten Diens, wie z.B. Butadien, sein oder ein Niederalkylacrylat, wie z.B. n-Butyl-, Ethyl-, Isobutyl- oder 2-Ethylhexylacrylat. Das Kernpolymer kann zusätzlich bis zu 20 Gew.-% von weiteren copolymerisierten einfach ungesättigten Monomeren, wie Styrol, Vinylacetat, Vinylchlorid, Methylmethacrylat und ähnlichen, enthalten. Das Kernpolymer ist optional quervernetzt. In bestimmten Ausführungsformen enthält es bis zu 5 Gew.-% eines copolymerisierten Pfopfmonomers, das zwei oder mehr ungesättigte Bindungen mit unterschiedliche Reaktivität enthält, wie beispielsweise Diallylmaleat, Monoallylfumarat, Allylmethacrylat und ähnliche, wobei mindestens eine der ungesättigten Bindungen nicht konjugiert ist.

Das Kernpolymer kann auch ein Silikonkautschuk sein. Diese Materialien haben oftmals Glasübergangstemperaturen von unter -100°C. Kern-Schale-Partikel, die solche Silikonkautschukkerne haben schließen solche ein, die kommerziell unter dem Handelsnamen Genioperl von Wacker Chemie (München, DE) erhältlich sind.

Das Schalenpolymer, das optional auf den Kern gepropft oder mit diesem vernetzt ist, ist vorzugsweise ein Polymer von einem Niederalkylmethacrylat, wie Methlymethacrylat, Ethylmethacrylat oder t-Butylmethacrylat. Es können Homopolymere solcher Methacrylate verwendet werden. Des Weiteren können bis zu 40 Gew.-% des Schalenpolymers aus anderen Vinyl-Monomeren, wie Styrol, Vinylacetate, Vinylchlorid, Methylacrylat, Ethylacrylat, Butylacrylat und ähnlichen gebildet werden. Das Molekulargewicht des gepfropften Schalepolymers beträgt im Allgemeinen zwischen 20,000 und 500,000.

Die Kautschukpartikel haben üblicherweise durchschnittliche Partikelgrößen von etwa 0,03 bis etwa 2 Mikrometer oder von etwa 0,05 bis etwa 1 Mikrometer. In bestimmten Ausführungsformen der Erfindung haben die Kautschukteilchen einen durchschnittlichen Durchmesser von weniger als etwa 500 nm. In anderen Ausführungsformen beträgt die durchschnittliche Partikelgröße weniger als etwa 200 nm. Zum Beispiel können die Kern-Schale-Kautschuk-Teilchen einen mittleren Durchmesser im Bereich von etwa 25 bis etwa 200 nm oder von etwa 50 bis 150 nm haben.

Verfahren zur Herstellung von Kautschuk-Teilchen mit einer Kern-Schale-Struktur sind im Stand der Technik gut bekannt und werden zum Beispiel in US-Patenten Nr. 3,985,703, 4,180,529, 4,315,085, 4,419,496, 4,778,851, 5,223,586, 5,290,857, 5,534,594, 5,686,509, 5,789,482, 5,981,659, 6,111,015, 6,147,142 und 6,180,693, 6,331,580 und 2005/124,761 beschrieben.

Die Kern-Schale-Partikel können in dem Schale-Polymer reaktive Gruppen aufweisen, die mit einem Epoxidharz oder einem Epoxidharz-Härter reagieren können. So sind beispielsweise Glycidylgruppen geeignet. Besonders bevorzugte Kern-Schale-Partikel sind die, die in der europäischen Patentanmeldung EP 1 632 533 A1 beschrieben werden. Die darin beschriebenen Kern-Schale-Partikel schließen einen quervernetzten Kautschukkern, in den meisten Fällen ein quervernetztes Copolymer von Butadien, und eine Schale, die vorzugsweise ein Copolymer von Styrol, Methylmethacrylat, Glycidylmethacrylat und optional Acrylonitril ist.

In verschiedenen Ausführungsformen werden Kern-Schale-Partikel verwendet, wie sie auch in der WO 2007/025007 beschrieben werden.

Die Kautschukpartikel mit Kern-Schale-Struktur sind vorzugsweise in einem Polymer oder Epoxidharz dispergiert, wie ebenfalls in dem oben zitierten Dokument beschrieben. Bevorzugte Kern-Schale-Partikel schließen die ein, die von der Kaneka Corporation unter der Bezeichnung Kaneka Kane Ace erhältlich sind, einschließlich Kaneka Kane Ace 15 und der 120er Produkt-Reihe, einschließlich Kaneka Kane Ace MX 153, Kaneka Kane Ace MX 156, Kaneka Kane Ace MX 257 und Kaneka Kane Ace MX 120 Kern-Schale-Partikel Dispersionen und Mischungen davon. Diese Produkte enthalten die Kern-Schale-Kautschukpartikel vordispergiert in einem Epoxidharz, mit Konzentrationen von ungefähr 33 oder 25 %.

Die Reaktionsgemische enthalten die Kern-Schale-Partikel vorzugsweise in Gesamtmengen von 2 Gew.-% bis 30 Gew.-%, insbesondere 5 bis 20 Gew.-%, jeweils bezogen auf das Gesamtgewicht der Reaktionsmischung und die Kern-Schale-Partikel als solche, d.h. ohne das eventuell vorhandene Dispersionsmedium.

Die Klebstoffzusammensetzungen der Erfindung enthalten die Kern-Schale-Partikel vorzugsweise in Gesamtmengen von mindestens 2 Gew.-%, bevorzugter mindestens 5 Gew.-%. In verschiedenen Ausführungsformen beträgt die Mengen an Kern-Schale-Partikeln in der Klebstoffformulierung bis zu 25 Gew.-%, typischerweise bis zu 20 Gew.-%.

Wie bereits oben beschrieben enthalten die Klebstoffzusammensetzungen der Erfindung in verschiedenen Ausführungsformen ein Präpolymer, das darstellbar ist durch Umsetzen von mindestens einem Epoxidharz mit mindestens einem Polyetherdiamin oder -triamin. Die Reaktion kann dabei in Gegenwart von mindestens einem carboxyl-terminiertes Butadien-Acrylnitril Copolymer (CTBN) bzw. einem Reaktionsprodukt eines solchen Copolymers mit einem Epoxidharz sowie Kautschukpartikel mit einer Kern-Schale-Struktur, optional in Form einer Dispersion in einem Epoxidharz und/oder als Epoxy-reaktive Kern-Schale-Partikel, durchgeführt werden. So werden Mischungen erhalten, die Polyetheramin-Epoxid-Addukte, CTBN-Epoxidharz-Addukte und Kautschukpartikel mit Kern-Schale-Struktur, optional in Form von Kern-Schale-Partikel-Epoxidharz-Addukten, sowie Mischpolymerisate der vorgenannten, wie z.B. Polyetheramin-CTBN-Epoxidharz-Addukte enthalten.

Die Erfinder haben überraschenderweise herausgefunden, dass sich durch die Verwendung solcher vorpolymerisierten Mischungen gehärtete Klebstoffzusammensetzungen herstellen lassen, die sich durch niedrige E Module, insbesondere <500 MPa, sowie gleichzeitig hohe Glasübergangstemperaturen von >100°C auszeichnen.

Die Klebstoffzusammensetzungen der Erfindung können ferner alle im Stand der Technik bekannten und üblichen zusätzlichen Bestandteile enthalten. Derartige zusätzlichen Bestandteile schließen ein, ohne darauf beschränkt zu sein, Haftvermittler, Härter, Füllstoffe, Treibmittel, Weichmacher, Verdünnungsmittel, Reaktivverdünner, Fließmittel, Kopplungsmittel, Benetzungsmittel, Flammschutzmittel, Mitte zur Kontrolle der Viskosität, Konservierungsmittel, Stabilisatoren und Farbstoffe.

Als Haftvermittler können beispielsweise Chelat-modifizierte Epoxidharze eingesetzt warden, wie sie beispielsweise in den US Patenten 4,702,962 und 4,340,716, dem Europäischen Patent EP 342 035 und den japanischen Patentdokumenten JP 58-063758 und JP 58-069265 beschrieben werden. Reaktionsprodukte von Epoxidharzen und Verbindungen, die chelatisierende Gruppen enthalten sind auch kommerziell erhältlich, beispielsweise als ADEKA Harze EP-49-10N, EP-49-55C, EP-49-10, EP-49-20, EP-49-23 und EP-49-25 (Asahi Denka). Solche Haftvermittler sind typischerweise in Mengen von ungeführ 0,1 bis 3 Gew.-% bezogen auf das Gesamtgewicht der Formulierung in der Klebstoffzusammensetzung enthalten.

Die Klebstoffzusammensetzungen enthalten in verschiedenen, bevorzugten Ausführungsformen ferner mindestens einen Härter. Diese Härter sind in der Lage die Bestandteile der Klebstoffzusammensetzung, ggf. bei erhöhter Temperatur, zu vernetzen und die Zusammensetzung dadurch zu härten. Der Härter wird vorzugsweise durch Erhitzen aktiviert. Der Härter kann katalytisch wirken, in bevorzugten Ausführungsformen der Erfindung nimmt er aber direkt an dem Härtungsprozess teil, indem er mit einem oder mehreren der übrigen Bestandteile reagiert.

Als thermisch aktivierbare oder latente Härter können in den Klebstoffzusammensetzungen beispielsweise Guanidine, substituierte Guanidine, substituierte Harnstoffe, Melaminharze, Guanamin-Derivate, zyklische tertiäre Amine, aromatische Amine oder Mischungen davon eingesetzt werden. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Heptamethylisobiguanidin und insbesondere Cyanoguanidin (Dicyandiamid). Beispiele für geeignete Guanamin-Derivate schließen alkylierte Benzoguanamin-Harze, Benzoguanamin Harze und Methoxymethylethoxymethylbenzoguanamin ein. Für 1K, Thermoset-Systeme ist das Auswahlkriterium die niedrige Löslichkeit dieser Substanzen in dem Harzsystem, daher werden feste, fein vermahlene Härter bevorzugt, insbesondere Dicyandiamid ist hier geeignet. Dadurch wird eine gute Lagerstabilität der Zusammensetzung sichergestellt.

Zusätzlich oder anstelle der vorstehend genannten Härter können auch katalytisch active, substituierte Harnstoffe verwendet werden. Bei diesen handelt es sich insbesondere um p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Im Prinzip können auch katalytisch aktive tertiäre Acryl- or Alkylamine, wie z.B. Benzyldimethylamin, tris(Dimethylamino)phenol, Piperidin oder Piperidinderivate verwendet werden, sind aber üblicherweise in dem Harzsystem zu gut löslich und daher für die Lagerstabilität nachteilig. Es können auch verschiedene katalytisch aktive, vorzugsweise feste Imidazolderivate verwendet werden. Beispiele sind 2-Ethyl-2-methylimidazol, N-Butylimidazol, Benzimidazol and N-Ci bis C₁₂-Alkylimidazole oder N-Arylimidazole. Besonders bevorzugt sind Kombinationen von Härter und Beschleuniger in Form von sogenannten beschleunigten Dicyandiamiden in fein vermahlener Form.

Die Menge an Härter hängt von einer Reihe von Faktoren ab, üblich sind aber Konzentrationen im Bereich von 0,5 bis 8 Gew.-% bezogen auf das Gesamtgewicht der Formulierung.

Geeignete Füllstoffe schließen die verschiedenen Kreiden, Quarzpulver, Alumina, Dolomit, Kohlenstofffasern, Glasfasern, Polymerfasern, Titandioxid, Kieselglas, Aktivkohle, Talkum, Calciumoxid, Calciummagnesiumcarbonate, Bariumsulfat und insbesondere Silikat-ähnliche Füllstoffe des Aluminium-Magnesium-Calciumsilikat Typs ein, wie zum Beispiele Wollastonit und Chlorit. Typischerweise enthalten die Zusammensetzungen ungefähr 0,5 bis ungefähr 10 Gew.-% Füllstoffe.

In bevorzugten Ausführungsformen enthalten die Zusammensetzungen der Erfindung keine Weichmacher, bzw. Weniger als 0,1 Gew.-% Weichmacher, da diese dazu neigen, die T_{g} zu senken.

Die Epoxidharzklebstoffe der vorliegenden Erfindung können auf einer Vielzahl von Oberflächen verwendet werden. Geeignete Materialien schließen ein, ohne darauf beschränkt zu sein, Metalle, wie Aluminium und Stahl, thermoplastische Polymere, wie Polyethylen, Polypropylen, Polyurethan, Polyacrylat und Polycarbonat sowie deren Copolymere, Thermoset Polymere, wie vulkanisierte Kautschuke, Harnstoff-Formaldehyd-Schäume, Melaminharze, Holz, Kohlenstofffaserverbundstoffe (CFC), Glassfaserverbundstoffe (GFC) und andere Verbundstoffe. Die Epoxidharz-Klebstoffe können dazu verwendet werden identische, ähnliche oder verschiedene Materialien miteinander zu verkleben, wie Stahl und Stahl, Stahl und Aluminium, CFC und Stahl, CFC und Aluminium, Polycarbonat und Vulkanisationskautschuk, oder Aluminium und Holz

Epoxidharzklebstoffe der Erfindung sind zur Verwendung in elektrophoretischen Beschichtungsverfahren (e-coating) geeignet, wie beispielsweise bei der Fertigung von Automobilteilen.

Die vorliegende Erfindung betrifft die Klebstoffzusammensetzungen im ungehärteten und gehärteten Zustand. Die Klebstoffzusammensetzungen können 1K oder 2K System sein, besonders bevorzugt handelt es sich um 1K Hot Melt Systeme. Ferner betrifft die Erfindung auch die mit den hierin beschriebenen Klebstoffzusammensetzungen verklebten Bauteile.

Ebenfalls Teil der Erfindung sind Verfahren zur Herstellung gehärteter Klebstoffe, die das Bereitstellen einer hierin beschriebenen Klebstoffzusammensetzung und das anschließende Aushärten umfassen, wobei das Aushärten teilweise oder vollständig sein kann und durch Exposition der Klebstoffzusammensetzung gegenüber Bedingungen, die das Härten bewirken oder erlauben, erfolgen kann. Letztere können beispielsweise das Erhitzen auf eine bestimmte Temperatur beinhalten.

Schließlich betrifft die Erfindung auch noch Herstellverfahren in denen zwei Bauteile unter Verwendung der hierin beschriebenen Klebstoffzusammensetzungen verklebt und die Zusammensetzung anschließend teilweise oder vollständig ausgehärtet wird bzw. die Verwendung der hierin beschriebenen Zusammensetzungen zum Verkleben von mindestens zwei Bauteilen.

Die erfindungsgemäße Zusammensetzung kann auf eine Substratoberfläche mittels im Stand der Technik bekannter Verfahren aufgebracht werden. Beispielsweise kann sie durch Extrusion oder durch mechanische Applikationsmethoden aufgebracht werden. Im Allgemeinen wird der Klebstoff auf eine oder beide der zu verbindenden Substrate aufgetragen. Die Substrate werden in Kontakt gebracht, so dass der Klebstoff zwischen den miteinander zu verklebenden Substraten liegt. Danach wird die Klebstoffmasse auf eine Temperatur, bei der der wärmehärtbare oder latente Härter die Härtung der Zusammensetzung initiiert, erhitzt.

Alle im Zusammenhang mit den Klebstoffzusammensetzungen offenbarten Ausführungsformen sind in gleicher Weise auch auf die ausgehärteten Formulierungen sowie die beschriebenen Verfahren anwendbar und umgekehrt.

Im Folgenden wir die Erfindung durch Beispiele illustriert, ohne aber auf diese beschränkt zu sein.

### Beispiele

### Durchführung:

Zur Herstellung der erfindungsgemäßen Zusammensetzung E1 wurden die ersten vier Komponenten der Formulierung vermischt und bei 120°C für 2h im Planetenmischer unter Vakuum vorreagiert. Zum so erhaltenen hochviskosen Präpolymer wurden bei 60°C alle weiteren Bestandteile der Formulierung zugegeben und 30 min unter Vakuum vermischt. Für das Vergleichsbeispiel V1 wurden nach demselben Verfahren nur die ersten beiden Bestanteile zum Präpolymer vorreagiert.

Der Elastizitätsmodul wurde nach DIN EN ISO 527, die TG mittels DMA in Anlehnung an ISO 6721-11 bestimmt. Geeignete Prüfkörper, wie in den Normen beschreiben, wurden in PTFE formen durch Aushärtung der Klebstoffformulierungen für 30 Minuten bei 180°C hergestellt.

**Tabelle 1: Klebstoffzusammensetzungen (Mengenangaben in Gew.-%)**

| | E1 | V1 |
|---|---|---|
| DER331 Epoxidharz (Dow Chemical) (1) | 20,96 | 35 |
| Jeffamine T5000 (Huntsman) (2) | 21,8 | 16,5 |
| Araldite LT 1522 ES (Huntsman) (3) | 6,55 | - |
| Kane Ace MX-153 (Kaneka) (4) | 32,34 | 30 |
| Dyhard 100SH | 4,55 | 5,7 |
| Fenuron | 0,3 | 0,3 |
| Cab-o-Sil TS720 | 4,0 | 4,0 |
| Casiflux A25 | 5,0 | 5,0 |
| Glymo | 0,5 | 0,5 |
| Super 40 | 3,0 | 3,0 |
| Luzenac 2 | 1,0 | - |

| | | |
|---|---|---|
| E: Erfindungsgemäß; V: Vergleichsbeispiel | | |

**Tabelle 2: Eigenschaften**

| | E1 | V1 |
|---|---|---|
| Young's Modul /MPa | 460 | 880 |
| T_{g} (G" max) /°C | 112 | 122 |

## Patentansprüche

1. Klebstoffzusammensetzung umfassend ein Präpolymer erhältlich durch Umsetzen eines Reaktionsgemisches enthaltend:
(a) mindestens ein Epoxidharz;
(b) mindestens ein Polyetherdiamin oder -triamin, insbesondere Polyethertriamin;
(c) mindestens ein carboxyl-terminiertes Butadien-Acrylnitril Copolymer *(*CTBN*)*; und
(d) Kautschukpartikel mit einer Kern-Schale-Struktur.

2. Klebstoffzusammensetzung nach Anspruch 1, **dadurch gekennzeichnet, dass**
(a) das mindestens eine Epoxidharz ein Polyepoxid, insbesondere ein Polyglycidylether ist; und/oder
(b) das mindestens eine Polyetherdiamin oder- triamin ein amino-terminiertes Polypropylenoxid ist.

3. Klebstoffzusammensetzung nach Anspruch 1 oder 2, **dadurch gekennzeichnet, dass** das mindestens eine carboxyl-terminiertes Butadien-Acrylnitril Copolymer (CTBN) als ein CTBN-Epoxidharz Addukt eingesetzt wird.

4. Klebstoffzusammensetzung nach einem der Ansprüche 1 bis 3, **dadurch gekennzeichnet, dass** in das Reaktionsgemisch für das Präpolymer das Epoxidharz in einer solchen Menge eingesetzt wird, dass die Epoxidgruppen bezogen auf die Summe an Epoxid-reaktiven Gruppen im molaren Überschuß vorliegen.

5. Klebstoffzusammensetzung nach einem der Ansprüche 1 bis 4, **dadurch gekennzeichnet, dass** die Klebstoffzusammensetzung ferner einen latenten Härter enthält.

6. Verfahren zur Herstellung einer gehärteten Klebstoffzusammensetzung, umfassend
(a) Bereitstellen einer Klebstoffzusammensetzung nach einem der Ansprüche 1 bis 5; und
(b) Teilweises oder vollständiges Härten der Klebstoffzusammensetzung durch Exposition gegenüber Bedingungen, die zum Aushärten der Klebstoffzusammensetzung geeignet sind, insbesondere durch Erhitzen.

7. Gehärtete Klebstoffzusammensetzung erhältlich gemäß dem Verfahren nach Anspruch 6.

8. Gehärtete Klebstoffzusammensetzung nach Anspruch 7, **dadurch gekennzeichnet, dass** die gehärtete Klebstoffzusammensetzung
(a) Ein E Modul von <800, insbesondere <600 MPa aufweist; und/oder
(b) Eine Glasübergangstemperatur T_{g} von >100°C aufweist, wobei der E-Modul nach DIN EN ISO 527 und die Glasübergangstemperatur mittels DMA in Anlehnung an ISO 6721-11 bestimmt wird.

9. Verfahren zum Verkleben von mindestens zwei Bauteilen, umfassend:
(d) Auftragen einer Klebstoffzusammensetzung nach einem der Ansprüche 1 bis 5 auf eines oder beide zu verklebende Bauteile;
(e) In Kontakt bringen der Bauteile derart, dass die Klebstoffzusammensetzung zwischen den beiden Bauteilen liegt; und
(f) Teilweises oder vollständiges Härten der Klebstoffzusammensetzung durch Exposition gegenüber Bedingungen, die zum Aushärten der Klebstoffzusammensetzung geeignet sind.

10. Bauteil erhältlich gemäß dem Verfahren nach Anspruch 9.

## Claims

1. An adhesive composition comprising a prepolymer that can be obtained by reacting a reaction mixture containing:
(a) at least one epoxy resin;
(b) at least one polyether diamine or triamine, in particular polyether triamine;
(c) at least one carboxyl-terminated butadiene acrylonitrile copolymer (CTBN); and
(d) rubber particles having a core-shell structure.

2. The adhesive composition according to claim 1, **characterized in that**
(a) the at least one epoxy resin is a polyepoxide, in particular a polyglycidyl ether; and/or
(b) the at least one polyether diamine or triamine is an amino-terminated polypropylene oxide.

3. The adhesive composition according to claim 1 or 2, **characterized in that** the at least one carboxyl-terminated butadiene acrylonitrile copolymer (CTBN) is used as a CTBN epoxy resin adduct.

4. The adhesive composition according to one of claims 1 to 3, **characterized in that**, in the reaction mixture for the prepolymer, the epoxy resin is used in an amount such that the epoxide groups are in molar excess relative to the sum of epoxide-reactive groups.

5. The adhesive composition according to one of claims 1 to 4, **characterized in that** the adhesive composition further contains a latent curing agent.

6. A method for preparing a cured adhesive composition, comprising
(a) preparing an adhesive composition according to one of claims 1 to 5; and
(b) curing the adhesive composition in part or completely by exposure to conditions that are suitable for curing the adhesive composition, in particular by heating.

7. A cured adhesive composition that can be obtained in accordance with the method according to claim 6.

8. The cured adhesive composition according to claim 7, **characterized in that** the cured adhesive composition
(a) has a modulus of elasticity of < 800, in particular < 600, MPa; and/or
(b) has a glass transition temperature T_{g} of > 100 °C, the modulus of elasticity being determined according to DIN EN ISO 527 and the glass transition temperature being determined by means of dynamic mechanical analysis in accordance with ISO 6721-11.

9. A method for bonding at least two components, comprising:
(d) applying an adhesive composition according to one of claims 1 to 5 to one or both of the components to be bonded;
(e) bringing the components into contact such that the adhesive composition is between the two components; and
(f) curing the adhesive composition in part or completely by exposure to conditions that are suitable for curing the adhesive composition.

10. A component that can be obtained in accordance with the method according to claim 9.

## Revendications

1. Composition adhésive comprenant un prépolymère pouvant être obtenu par réaction d'un mélange réactionnel contenant :
(a) au moins une résine époxyde ;
(b) au moins une polyétherdiamine ou triamine, en particulier la polyéthertriamine ;
(c) au moins un copolymère butadiène-acrylonitrile à terminaison carboxyle (CTBN) ;et
(d) des particules de caoutchouc possédant une structure noyau-coquille.

2. Composition adhésive selon la revendication 1, **caractérisée en ce**
(a) **qu'**au moins une résine époxyde est un polyépoxyde, en particulier un éther polyglycidylique ; et/ou
(b) **qu'**au moins une polyétherdiamine ou -triamine est un oxyde de polypropylène à terminaison amine.

3. Composition adhésive selon la revendication 1 ou 2, **caractérisée en ce qu'**au moins un copolymère butadiène-acrylonitrile à terminaison carboxyle (CTBN) est utilisé comme adduit de résine époxyde CTBN.

4. Composition adhésive selon l'une quelconque des revendications 1 à 3, **caractérisée en ce que** la résine époxyde est introduite dans le mélange réactionnel pour le prépolymère à raison d'une quantité telle que les groupes époxydes sont présents en excès molaire par rapport à la somme des groupes époxydes réactifs.

5. Composition adhésive selon l'une quelconque des revendications 1 à 4, **caractérisée en ce que** la composition adhésive contient en outre un durcisseur latent.

6. Procédé de préparation d'une composition adhésive durcie comprenant
(a) la fourniture d'une composition adhésive selon l'une quelconque des revendications 1 à 5 ; et
(b) un durcissement partiel ou complet de la composition adhésive par exposition à des conditions appropriées pour son durcissement, en particulier par chauffage.

7. Composition adhésive durcie pouvant être obtenue selon le procédé de la revendication 6.

8. Composition adhésive durcie selon la revendication 7, **caractérisée en ce que** la composition adhésive durcie présente
(a) un module d'élasticité E inférieur à 800, en particulier inférieur à 600 MPa ; et/ou
(b) une température de transition vitreuse T_{g} >100°C, le module d'élasticité selon la norme DIN EN ISO 527 et la température de transition vitreuse étant déterminés au moyen d'une AMD selon la norme ISO 6721-11.

9. Procédé de liaison d'au moins deux composants, comprenant :
(d) l'application d'une composition adhésive selon l'une des revendications 1 à 5 à l'un ou aux deux composants à coller ;
(e) la mise en contact des composants de sorte que la composition adhésive se trouve entre les deux composants ; et
(f) un durcissement partiel ou complet de la composition adhésive par exposition à des conditions appropriées pour son durcissement.

10. Le composant peut être obtenu selon le procédé de la revendication 9.
